# EUROPEAN PATENT APPLICATION

(11) **EP 3 826 139 A1**
(43) Date of publication of application: **26.05.2021**
(21) Application number: 18930837.2
(22) Date of filing: 21.08.2018
(51) Int. Cl.: H02J 50/12, H02J 50/40, H02J 50/60, H02J 50/70, H02J 50/80

(54) **POWER TRANSMISSION CONTROL DEVICE FOR NON-CONTACT POWER SUPPLY, POWER TRANSMISSION CONTROL METHOD FOR NON-CONTACT POWER SUPPLY, AND NON-CONTACT POWER SUPPLY SYSTEM**

(71) Applicant: Mitsubishi Electric Corporation, Tokyo 100-8310 (JP)
(72) Inventor: OTSUBO, Fumie, Tokyo 100-8310 (JP); SHIMURA, Ryo, Tokyo 100-8310 (JP); MAMADA, Daichi, Tokyo 100-8310 (JP); AKUZAWA, Yoshiyuki, Tokyo 102-0073 (JP)
(74) Representative: Pfenning, Meinig & Partner mbB
(86) International application number: PCT/JP2018/030812
(87) International publication number: WO 2020/039499

(57) **Abstract**

Included are: a power transmission unit (1042) for starting power supply to multiple transmission antennas (11) in conjunction with an external switch when the external switch is operated; and an antenna determination unit (1043) for determining a power transmission target antenna with which the power supply from the power transmission unit (1042) is to be continued, from among the multiple transmission antennas (11) to which the power supply has been started.

## Description

### TECHNICAL FIELD

The present invention relates to a power transmission control device, a power transmission control method, and a non-contact power supply system.

### BACKGROUND ART

In the related art, in a case where a power transmission device for performing non-contact power supply includes multiple transmission antennas, there is known technology capable of detecting a transmission antenna, to which a power receiving appliance is disposed to face, from among the multiple transmission antennas.

For example, Patent Literature 1 discloses a non-contact power supply system in which a rated current is supplied to primary coils of multiple non-contact power supply units arranged on a wall of a building or the like during normal power supply operation at regular time intervals to generate a high-frequency magnetic field, and it is detected whether or not a non-contact power reception unit is disposed to face the non-contact power supply unit depending on a change pattern in which the impedance on the power receiving side viewed from the non-contact power supply unit changes. Note that the multiple non-contact power supply units disclosed in Patent Literature 1 each include a primary coil. This primary coil functions as a transmission antenna.

### CITATION LIST

### PATENT LITERATURE

Patent Literature 1: JP 2009-159685 A

### SUMMARY OF INVENTION

### TECHNICAL PROBLEM

In conventional technology as disclosed in Patent Literature 1, power supply from each transmission antenna is sequentially turned on and off at regular time intervals during normal power supply operation. Thus, even in an area where no power receiving appliance including a non-contact power reception unit is disposed to face a transmission antenna, power is supplied at regular time intervals. As a result, the related art has a disadvantage that unnecessary electromagnetic waves are radiated at regular time intervals in an area where no power receiving appliance is disposed to face a transmission antenna. The electromagnetic waves may affect a power receiving appliance installed in the vicinity of the electromagnetic waves as interference waves.

The present invention has been made to solve the above-described problem, and an object of the invention is to provide a power transmission control device capable of reducing unnecessary radiation of electromagnetic waves from a transmission antenna.

### SOLUTION TO PROBLEM

A power transmission control device for non-contact power supply according to the present invention includes: a power transmission unit for starting power supply to multiple transmission antennas in conjunction with an external switch when the external switch is operated; and an antenna determination unit for determining a power transmission target antenna, to which the power supply from the power transmission unit is to be continued, from among the multiple transmission antennas to which the power supply has been started.

### ADVANTAGEOUS EFFECTS OF INVENTION

According to the present invention, unnecessary radiation of electromagnetic waves from transmission antennas can be reduced.

### BRIEF DESCRIPTION OF DRAWINGS

FIG. 1 is a diagram for explaining an example of a configuration of a non-contact power supply system according to a first embodiment.
FIG. 2A is a diagram illustrating a configuration example of the entire non-contact power supply system according to the first embodiment.
FIG. 2B is a diagram illustrating a specific configuration example of a power transmission control device included in a power transmission device in the first embodiment.
FIG. 2C is a diagram illustrating a specific configuration example of a power receiving appliance in the first embodiment.
FIG. 3 is a table illustrating an example of a relationship between parameters for which a foreign matter detecting unit detects a change and foreign matter detected by a change in the parameters in the first embodiment.
FIG. 4 is a flowchart for explaining the operation of the power transmission control device according to the first embodiment.
FIG. 5 is a diagram illustrating an example of a state in which a reception antenna is installed across transmission antennas in the first embodiment.
FIGS. 6A and 6B are diagrams each illustrating an exemplary hardware configuration of the power transmission control device according to the first embodiment.
FIG. 7 is a diagram for describing a configuration example of a power transmission device and a power receiving appliance in a non-contact power supply system according to a second embodiment.

### DESCRIPTION OF EMBODIMENTS

To describe the present invention further in detail, embodiments for carrying out the present invention will be described below by referring to the accompanying drawings.

### First Embodiment

In the following first embodiment, as an example, it is assumed that a non-contact power supply scheme of a resonance type is employed in a non-contact power supply system. Since the technology of the resonance-type non-contact power supply scheme is existing technology, detailed description will be omitted.

In a resonance-type non-contact power supply scheme, power can be supplied from a power transmission device to a power receiving appliance even in a state in which the power receiving appliance that operates being supplied with power from the power transmission device is not installed to accurately face the power transmission device. The state in which the power receiving appliance is not installed to face the power transmission device refers to a state in which the surfaces and the centers of the power receiving appliance and the power transmission device do not face each other so as to overlap.

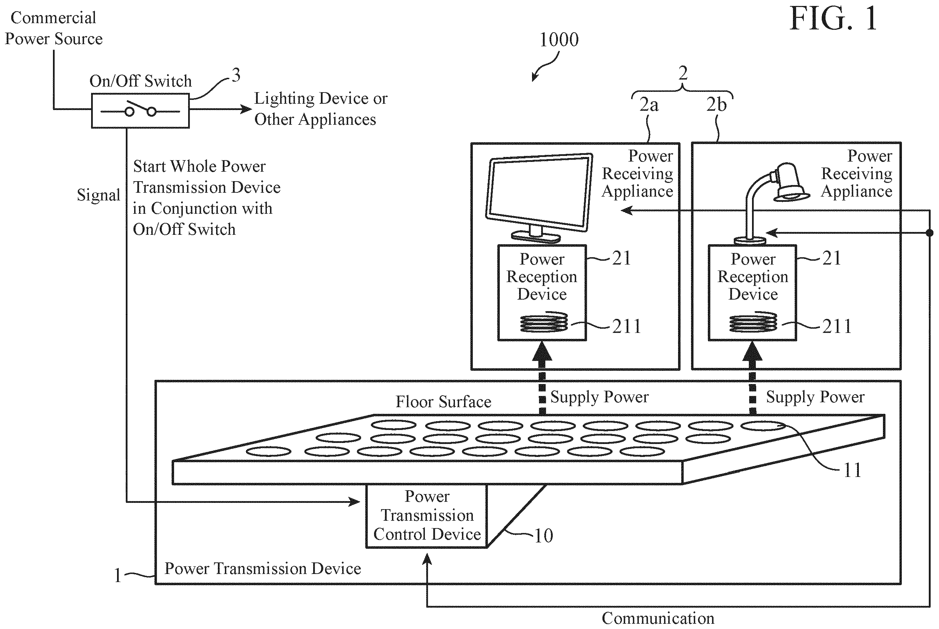

FIG. 1 is a diagram for explaining an example of a configuration of a non-contact power supply system 1000 according to the first embodiment.

In the first embodiment described below, the non-contact power supply system 1000 is used in a building such as a house.

A power transmission device 1 and power receiving appliances 2 are included in the non-contact power supply system 1000.

In the non-contact power supply system 1000, the power transmission device 1 installed in a structure included in a building such as a floor or a wall of the building supplies power to the power receiving appliances 2 in a non-contact manner. In the first embodiment, as an example, the structure in which the power transmission device 1 is installed is a floor as illustrated in FIG. 1.

In the first embodiment, the power receiving appliances 2 are household electric appliances. In FIG. 1, a television 2a and a desk lamp 2b are illustrated as exemplary household electric appliances. In this specification, the term "home electric appliance" is not limited to electric appliances exclusively used in a general household, but also includes various electric appliances.

A user can install the power receiving appliances 2 as appropriate in an area where the power transmission device 1 can supply power. In addition, the user can remove the power receiving appliances 2, which are installed in the area where the power transmission device 1 can supply power, to the outside of the area, or can be moved within the area.

The power transmission device 1 includes a power transmission control device 10 and multiple transmission antennas 11, receives power supplied from a commercial power source, and supplies power to a power receiving appliance 2 installed in an area where power can be supplied. Specifically, the power transmission control device 10 receives power and supplies high-frequency AC power (hereinafter, referred to as "high-frequency power") to any one of the multiple transmission antennas 11. Having received supply of the high-frequency power from the power transmission control device 10, the transmission antenna 11 resonates at the same frequency as that of the high-frequency power and generates a magnetic field in space (hereinafter, the state in which a transmission antenna 11 receives the supply of the high-frequency power and generates a magnetic field in the space is referred to as the "activated state".) When a power receiving appliance 2 is installed in an area where power can be supplied from the transmission antenna 11, power is supplied to a power reception device 21 included in the power receiving appliance 2 in a non-contact manner. As a result, non-contact power supply is performed from the power transmission device 1 to the power receiving appliance 2. Note that, in the following description, the multiple transmission antennas 11 are also simply referred to as transmission antennas 11.

The power transmission control device 10 is installed inside the floor. A detailed configuration example of the power transmission control device 10 will be described later.

The multiple transmission antennas 11 are each installed on the floor surface, inside the floor material, or under the floor. In FIG. 1, the multiple transmission antennas 11 are laid on the floor at a narrow intervals from each other. However, it is not essential that the transmission antennas 11 be laid on the floor in this manner. The transmission antenna 11 may be installed in the floor in a scattered manner. Also, in FIG. 1, the example of the state in which the transmission antennas 11 are installed is illustrated by circles; however, this is merely the example of the state of installation and does not illustrate the shape of the transmission antennas 11.

The power transmission control device 10 and the transmission antennas 11 are connected by, for example, cables.

The supply of power from the commercial power source to the power transmission device 1 is controlled by a switch 3.

The switch 3 is, for example, for turning on or off a lighting installed in the building. For example, when the user turns on the switch 3, the power transmission control device 10 of the power transmission device 1 starts processing such as activation of the transmission antennas 11 described below in conjunction with the operation of the switch 3.

The power receiving appliances 2 receive power from the power transmission device 1 in a non-contact manner. Specifically, the power receiving appliances 2 each include a power reception device 21 including a reception antenna 211, and the power reception device 21 receives power from the power transmission control device 10 in a non-contact manner via the reception antenna 211 and a transmission antenna 11.

The reception antenna 211 resonates at the same frequency as the resonance frequency of the transmission antenna 11 by the magnetic field generated by a transmission antenna 11 in the activated state, thereby receiving power from the transmission antenna 11 in a non-contact manner.

The power received by the power reception device 21 enables the power receiving appliance 2 to operate.

A detailed configuration example of the power receiving appliances 2 will be described later.

The power transmission control device 10 and the power receiving appliances 2 can communicate with each other using wireless communication. As communication standards, for example, Bluetooth (registered trademark, hereinafter omitted), Zigbee (registered trademark, hereinafter omitted), or the like is used.

Each time the switch 3 is turned on from the OFF state, the power transmission control device 10 outputs an activation signal and starts supplying high-frequency power to the transmission antennas 11, thereby allowing the transmission antennas 11 to enter the activated state. In a case where a power receiving appliance 2 is installed in an area where power can be supplied from the transmission antennas 11 in the activated state, non-contact power supply to the power receiving appliance 2 is started by one of the transmission antennas 11. The power receiving appliance 2 to which the non-contact power supply has started transmits a response signal in response to the start of the non-contact power supply to the power transmission control device 10.

The power transmission control device 10 determines a transmission antenna for which high-frequency power supply needs to be continued (hereinafter referred to as a "power transmission target antenna") among the transmission antennas 11 in the activated state in response to the response signal received from the power receiving appliance 2. The power transmission control device 10 continues to supply the high-frequency power to the power transmission target antenna, thereby allowing the power transmission target antenna to stay in the activated state. The power transmission control device 10 stops supplying the high-frequency power to transmission antennas 11 other than the power transmission target antenna. The transmission antennas 11 to which the supply of high-frequency power have been stopped do not enter the activated state unless an activation signal is output with the switch 3 turned on again.

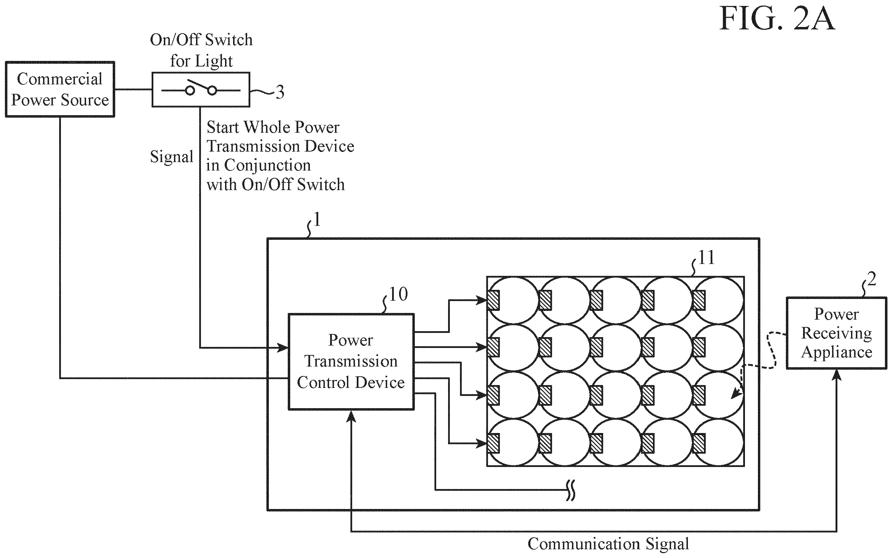

FIG. 2A is a diagram illustrating a configuration example of the entire non-contact power supply system 1000 according to the first embodiment.

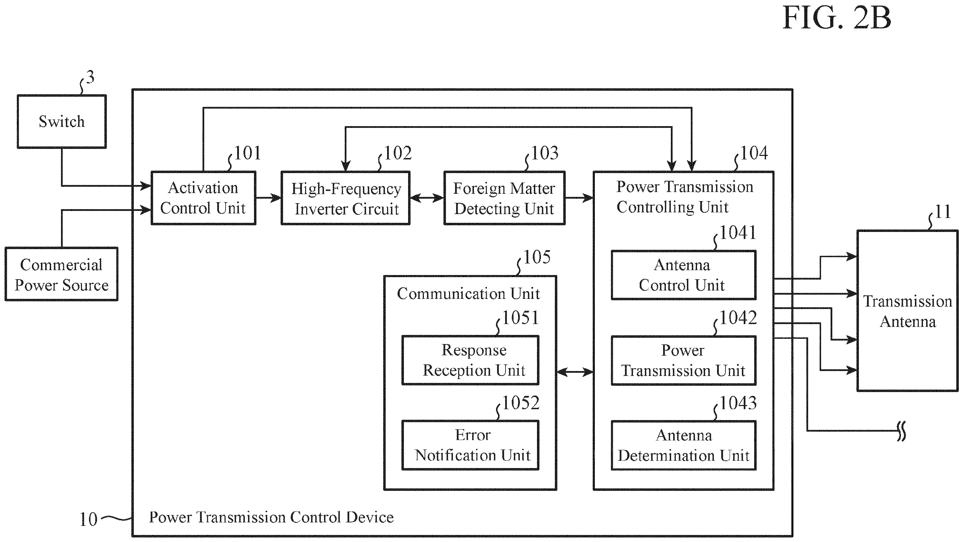

FIG. 2B is a diagram illustrating a specific configuration example of the power transmission control device 10 included in the power transmission device 1 in the first embodiment.

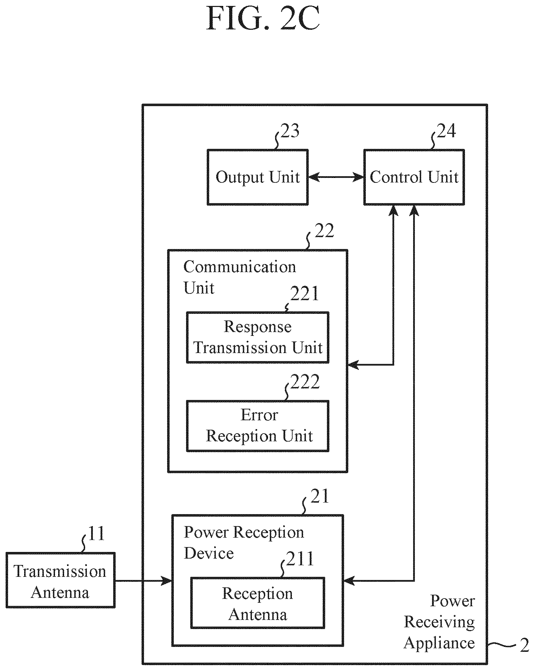

FIG. 2C is a diagram illustrating a specific configuration example of the power receiving appliances 2 in the first embodiment.

As illustrated in FIG. 2A, the power transmission device 1 includes the power transmission control device 10 and the transmission antennas 11.

In the power transmission device 1 according to the first embodiment, each time the switch 3 is turned on, the power transmission control device 10 performs the "activation process" of activating the transmission antennas 11 and "steady power transmission process" after the activation process, and the steady power transmission process includes processes of determining a power transmission target antenna, causing the power transmission target antenna to stay in the activated state, and performing steady non-contact power supply to a power receiving appliance 2.

The power transmission control device 10 includes an activation control unit 101, a high-frequency inverter circuit 102, a foreign matter detecting unit 103, a power transmission controlling unit 104, and a communication unit 105.

The power transmission controlling unit 104 includes an antenna control unit 1041, a power transmission unit 1042, and an antenna determination unit 1043.

The communication unit 105 includes a response reception unit 1051 and an error notification unit 1052.

The activation control unit 101 outputs an activation signal in conjunction with the operation of the switch 3.

For example, the activation control unit 101 outputs an activation signal to the power transmission controlling unit 104 when the switch 3 is turned on from the OFF state.

The activation control unit 101 also receives power supplied from the commercial power source. Note that, in the first embodiment, the commercial power source is assumed to be, for example, a commercial AC power source of 50 Hz or 60 Hz. The activation control unit 101 outputs the power supplied from the commercial power source to the high-frequency inverter circuit 102. At this point, the activation control unit 101 also functions as a conversion unit that converts the commercial power source, which is AC power, into DC power.

The high-frequency inverter circuit 102 converts the DC power output from the activation control unit 101 into high-frequency power. The high-frequency inverter circuit 102 outputs the high-frequency power to the foreign matter detecting unit 103 and the power transmission controlling unit 104.

The power transmission controlling unit 104 controls the supply of the high-frequency power output from the high-frequency inverter circuit 102 to the transmission antennas 11.

The antenna control unit 1041 of the power transmission controlling unit 104 controls the supply of high-frequency power to the transmission antennas 11 by the power transmission unit 1042.

Specifically, the antenna control unit 1041 activates the transmission antennas 11 by causing the power transmission unit 1042 to supply high-frequency power to the transmission antennas 11 when an activation signal is output from the activation control unit 101 in the "activation process". At this point, the antenna control unit 1041 activates all the other transmission antennas 11 except for the transmission antenna 11 that has been set as the power transmission target antenna in the previous "steady power transmission process" and been in the activated state.

Note that although the antenna control unit 1041 activates all the other transmission antennas 11 except for the transmission antenna 11 that has been set as the power transmission target antenna in the previous "steady power transmission process" and been in the activated state in the first embodiment as described above, this is merely an example. The antenna control unit 1041 may activate all the transmission antennas 11 by causing the power transmission unit 1042 to supply high-frequency power to all the transmission antennas 11 when an activation signal is output from the activation control unit 101.

The antenna control unit 1041 also determines whether or not the power transmission device 1 is normally activated when the transmission antennas 11 are activated by causing the high-frequency power to be supplied to the transmission antennas 11 in the "activation process". Details will be described later.

The antenna control unit 1041 further controls the power transmission unit 1042 to continue the supply of high-frequency power to the power transmission target antenna and stops the supply of high-frequency power to transmission antennas 11 other than the power transmission target antenna when the antenna determination unit 1043 determines a power transmission target antenna in the "steady power transmission process". Details will be described later.

The antenna control unit 1041 also outputs an error signal to the communication unit 105 and causes the power transmission unit 1042 to stop the supply of high-frequency power to the power transmission target antenna when the foreign matter detecting unit 103 detects foreign matter for the activated power transmission target antenna in the "steady power transmission process". Details will be described later.

Furthermore, the antenna control unit 1041 determines whether or not the activated power transmission target antenna is performing non-contact power supply to the power reception device 21 in the "steady power transmission process". When determining that no non-contact power supply is being performed to the power reception device 21, the antenna control unit 1041 outputs an error signal to the communication unit 105 and causes the power transmission unit 1042 to stop the supply of high-frequency power to the power transmission target antenna. Details will be described later.

The power transmission unit 1042 of the power transmission controlling unit 104 starts supplying high-frequency power to the transmission antennas 11 under the control of the antenna control unit 1041 when the activation control unit 101 outputs an activation signal in the "activation process".

Moreover, in the "steady power transmission process", the power transmission unit 1042 continues to supply high-frequency power to the power transmission target antenna and stops supplying high-frequency power to transmission antennas 11 other than the power transmission target antenna under the control of the antenna control unit 1041.

The antenna determination unit 1043 of the power transmission controlling unit 104 determines a power transmission target antenna from the multiple transmission antennas in the activated state in response to the response signal in the "steady power transmission process" when the response reception unit 1051 of the communication unit 105 receives a response signal from a power receiving appliance 2 during the "activation process".

The antenna determination unit 1043 outputs information of the determined power transmission target antenna to the antenna control unit 1041.

The foreign matter detecting unit 103 detects foreign matter present between the power transmission device 1 and a power reception device 21 on the basis of the supply state of high-frequency power to the power transmission target antenna while the power transmission unit 1042 is supplying high-frequency power to the power transmission target antenna in the "steady power transmission process". Specifically, the foreign matter detecting unit 103 detects foreign matter present between the power transmission target antenna and the reception antenna 211.

In the first embodiment, "between the transmission antenna 11 and the reception antenna 211" refers to a space in which non-contact power supply to the power receiving appliance 2 is performed mainly by transmission of a magnetic field in the electromagnetic waves generated in the space by the transmission antennas 11 in the activated state.

The foreign matter detecting unit 103 detects a change in a parameter and detects foreign matter on the basis of the detected change in the parameter. Parameters for which the foreign matter detecting unit 103 detects a change include an input voltage or an input current of the high-frequency inverter circuit 102 and the like.

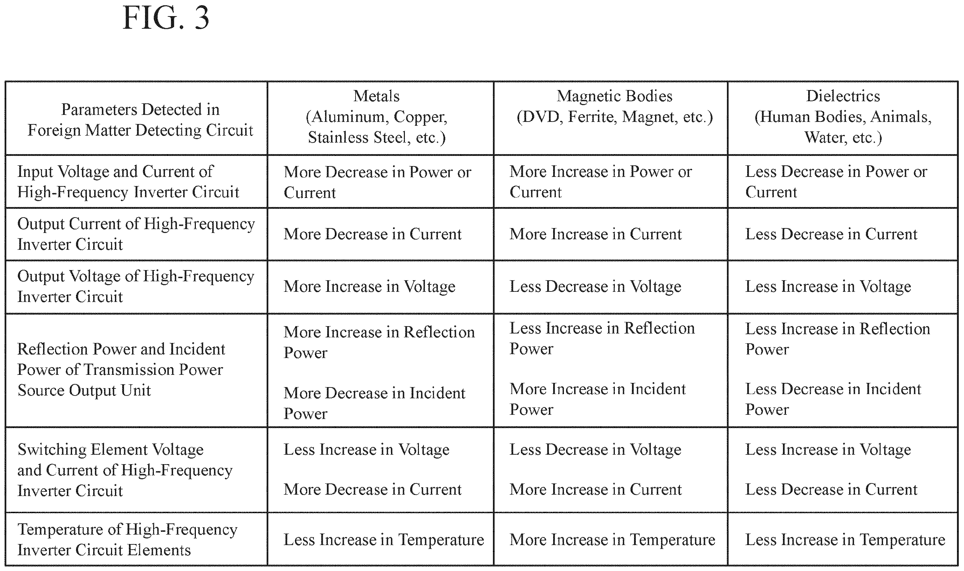

FIG. 3 is a table illustrating an example of a relationship between parameters for which the foreign matter detecting unit 103 detects a change and foreign matter detected by a change in the parameters in the first embodiment.

As illustrated in FIG. 3, the foreign matter detecting unit 103 detects foreign matter as follows using, for example, an input voltage or an input current of the high-frequency inverter circuit 102 as a parameter.
* In a case where a decrease in the power or the current is greater than a preset threshold value (first threshold value), metal such as aluminum, copper, or stainless steel is detected as foreign matter. Note that the foreign matter detecting unit 103 calculates the power from the input voltage and the input current.
* In a case where an increase in the power or the current is greater than a preset threshold value (second threshold value), a magnetic body such as a digital versatile disc (DVD), ferrite, or a magnet is detected as foreign matter.
* In a case where a decrease in the power or the current is smaller than a preset threshold value (third threshold value), a dielectric such as a human body, an animal, or water is detected as foreign matter.

As described above, the foreign matter detecting unit 103 detects foreign matter in accordance with a change in the parameters. The foreign matter detecting unit 103 can specify the type of foreign matter in accordance with a change in the parameter. The foreign matter detecting unit 103 can further detect multiple different types of foreign matter by combining the parameters as illustrated in FIG. 3. As more parameters are detected, the detection accuracy of foreign matter improves.

When foreign matter is detected, the foreign matter detecting unit 103 outputs information indicating that the foreign matter has been detected to the power transmission controlling unit 104.

The communication unit 105 transmits and receives information to and from the power receiving appliance 2 by wireless communication. As communication standards, for example, Bluetooth, Zigbee, or the like is used.

The response reception unit 1051 of the communication unit 105 receives a response signal transmitted from the power receiving appliance 2 in the "activation process".

In a case where a power receiving appliance 2 is installed in an area where power can be supplied from the activated transmission antennas 11, the reception antenna 211 of the power reception device 21 receives power, thereby non-contact power supply to the power receiving appliance 2 is started by one of the transmission antennas 11. The power receiving appliance 2, to which the non-contact power supply has been started, transmits a response signal for the start of the non-contact power supply to the power transmission control device 10 by a communication unit 22. The response reception unit 1051 receives a response signal transmitted by the power receiving appliance 2 to which the non-contact power supply has been started.

Note that, in a case where there are multiple power receiving appliances 2 to be supplied with power, a response signal is transmitted from each of the power receiving appliances 2, and the response reception unit 1051 receives each of the response signals. A response signal received by the response reception unit 1051 is, for example, a flag, and it cannot be determined from which power receiving appliance 2 the response signal is transmitted on the basis of the response signal.

The response reception unit 1051 outputs the received response signal to the power transmission controlling unit 104.

When an error signal is output from the power transmission controlling unit 104, the error notification unit 1052 of the communication unit 105 transmits the error signal to the power receiving appliance 2 in the "steady power transmission process".

As illustrated in FIG. 2C, a power receiving appliance 2 includes the power reception device 21, the communication unit 22, an output unit 23, and a control unit 24. The power reception device 21 includes the reception antenna 211.

The communication unit 22 includes a response transmission unit 221 and an error reception unit 222.

The power reception device 21 receives power from a transmission antenna 11 via the reception antenna 211. Note that the power reception device 21 includes a rectifier circuit (not illustrated) and a DC/DC converter (not illustrated), and converts the AC power received by the reception antenna 211 into DC power in the power reception device 21.

The power reception device 21 outputs the power received by the reception antenna 211 to the control unit 24. The control unit 24 operates with the power output from the power reception device 21 and controls each of the components of the power receiving appliance 2.

The communication unit 22 transmits and receives information to and from the power transmission control device 10 by wireless communication. As communication standards, for example, Bluetooth, Zigbee, or the like is used.

The response transmission unit 221 of the communication unit 22 transmits a response signal to the communication unit 105 of the power transmission control device 10 when non-contact power supply is started from the power transmission control device 10 to the power reception device 21 via the reception antenna 211 and a transmission antenna 11. Specifically, the control unit 24 controls the response transmission unit 221 to transmit a response signal when the control unit 24 causes the power receiving appliance 2 to operate with the power received by the power reception device 21. Note that the operation of the response transmission unit 221 transmitting a response signal to the communication unit 105 of the power transmission control device 10 is performed at the time of the "activation process" of activating the transmission antennas 11 every time the switch 3 is turned on in the power transmission control device 10. In the power transmission control device 10, the antenna determination unit 1043 determines a power transmission target antenna depending on a response signal received from the communication unit 22 in the "steady power transmission process" when the response reception unit 1051 receives the response signal from the communication unit 22 during the "activation process".

The error reception unit 222 of the communication unit 22 receives an error signal transmitted from the power transmission control device 10. Note that the operation by the error reception unit 222 for receiving the error signal transmitted from the power transmission control device 10 is performed at the time of "steady power transmission process" in the power transmission control device 10.

The error reception unit 222 outputs the received error signal to the control unit 24. The control unit 24 causes the output unit 23 to temporarily output error information when the error signal is output from the error reception unit 222.

The output unit 23 is a display or a level meter and outputs various types of information.

For example, the output unit 23 outputs information indicating a power supply state from the power transmission device 1 in the power receiving appliance 2. Specifically, the power receiving appliance 2 includes a measurement unit (not illustrated) for measuring the power (hereinafter, referred to as the "power measurement value") that the power reception device 21 receives from the power transmission control device 10 via the reception antenna 211 and the transmission antenna 11. The control unit 24 controls the output unit 23 on the basis of the power measurement value and causes the output unit 23 to output information indicating the power supply state. Note that, for example, a wattmeter is used as the measurement unit.

The control unit 24 causes the output unit 23 to output information indicating the power supply state by various methods on the basis of the power measurement value.

For example, in a case where the output unit 23 is a display, the output unit 23 displays the power measurement value in characters. Alternatively, for example in a case where the output unit 23 is a level meter, the output unit 23 displays the power supply state based on the power measurement value with light. Further alternatively, for example, the output unit 23 may be a speech output device, and may output the power supply state based on the power measurement value by speech.

The user can grasp the relative position between the power receiving appliance 2 and the power transmission device 1 by verifying the information indicating the power supply state output by the output unit 23. The relative position between the power receiving appliance 2 and the power transmission device 1 specifically refers to the relative position between the reception antenna 211 and the transmission antenna 11.

The output unit 23 outputs error information under the control of the control unit 24.

For example in a case where the output unit 23 is a display, the output unit 23 displays an error message.

The control unit 24 controls each of the components of the power receiving appliance 2.

The operation of the power transmission control device 10 according to the first embodiment will be described.

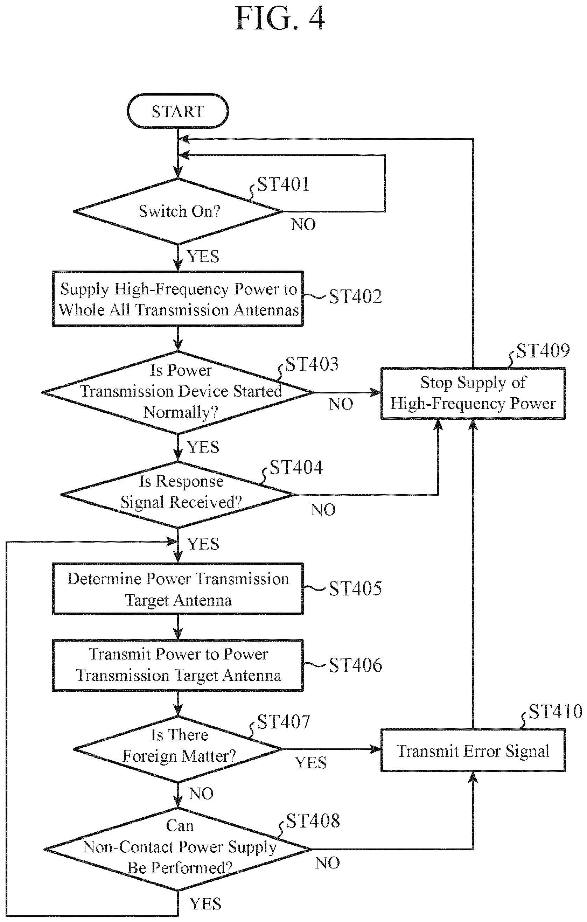

FIG. 4 is a flowchart for explaining the operation of the power transmission control device 10 according to the first embodiment.

Note that, in the following description using FIG. 4, the operation of the power transmission control device 10 will be described assuming that the power transmission device 1 is activated for the first time after installation.

The operations of steps ST401 to ST404 and step ST409 described below are operations of the "activation process", and the operations of steps ST405 to ST410 are operations of the "steady power transmission process".

The activation control unit 101 stands by until the switch 3 is turned on from the OFF state ("NO" in step ST401). When the switch 3 is turned on ("YES" in step ST401), the activation control unit 101 outputs the power supplied from the commercial power source to the high-frequency inverter circuit 102 and outputs an activation signal to the power transmission controlling unit 104.

The antenna control unit 1041 of the power transmission controlling unit 104 causes the power transmission unit 1042 to supply high-frequency power to all the transmission antennas 11 when the activation signal is output from the activation control unit 101 in step ST401 (step ST402).

Here, the antenna control unit 1041 determines whether or not the power transmission device 1 is activated normally (step ST403). Specifically, the antenna control unit 1041 determines that the power transmission device 1 is normally activated if the voltage level or the current level of the high-frequency power output from the high-frequency inverter circuit 102 reaches a preset voltage level or current level.

If the antenna control unit 1041 determines that the power transmission device 1 is activated normally ("YES" in step ST403), the antenna control unit 1041 proceeds to step ST404.

If the antenna control unit 1041 determines that the power transmission device 1 is not activated normally ("NO" in step ST403), the antenna control unit 1041 causes the power transmission unit 1042 to stop the supply of high-frequency power (step ST409).

Note that, in step ST409, the supply of high-frequency power to all the transmission antennas 11 performed by the power transmission unit 1042 is stopped.

The supply of the high-frequency power to the transmission antenna 11 remains turned off until the user turns on the switch 3 again which is in the OFF state (step ST401).

In step ST404, the response reception unit 1051 of the communication unit 105 determines whether or not a response signal from the power receiving appliance 2 has been received as a result of the power transmission unit 1042 having supplied high-frequency power to the transmission antennas 11 in step ST402 (step ST404).

In step ST404, if the response reception unit 1051 has received no response signal ("NO" in step ST404), the process proceeds to step ST409.

In step ST404, if the response reception unit 1051 has received a response signal ("YES" in step ST404), the response reception unit 1051 outputs the received response signal to the power transmission controlling unit 104.

When the response signal is output from the response reception unit 1051 in step ST404, the antenna control unit 1041 starts the "steady power transmission process". Specifically, the antenna control unit 1041 determines a transmission antenna 11 that needs to be continuously supplied with the high-frequency power among the multiple transmission antennas 11 and starts a process for continuing the supply of high-frequency power to the transmission antenna 11 that the power transmission unit 1042 has been caused to perform in step ST402.

The antenna determination unit 1043 of the power transmission controlling unit 104 determines a power transmission target antenna in response to the response signal that the response reception unit 1051 has received from the power receiving appliance 2 in step ST404 (step ST405).

Here, the method for the antenna determination unit 1043 to determine a power transmission target antenna will be described using a specific example.

For example, in step ST404, let us assume that the response reception unit 1051 has received response signals from three power receiving appliances 2.

In this case, the antenna determination unit 1043 specifies three transmission antennas 11 in better states in a descending order among all the transmission antennas 11 on the basis of the state of the non-contact power supply by each of the transmission antennas 11 and determines the three transmission antennas 11 as power transmission target antennas.

The antenna determination unit 1043 is only required to determine the non-contact power supply state on the basis of the voltage level or the current level of the high-frequency power output from the high-frequency inverter circuit 102.

It is also assumed that, for example, one reception antenna 211 is installed across multiple transmission antennas 11. Note that, in the first embodiment, "for one reception antenna 211 to be installed across multiple transmission antennas 11" refers to a positional relationship between the one reception antenna 211 and the multiple transmission antennas 11 in which non-contact power supply can be performed from any of the multiple transmission antennas 11 to the one reception antenna 211.

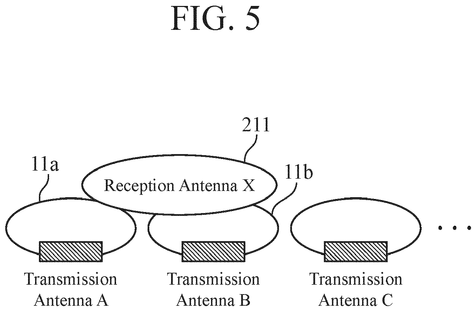

FIG. 5 is a diagram illustrating an example of a state in which a reception antenna 211 is installed across transmission antennas 11 in the first embodiment.

FIG. 5 is a diagram illustrating an example in which a reception antenna X (211) is installed across a transmission antenna A (11a) and a transmission antenna B (11b).

In this case, the antenna determination unit 1043 determines a power transmission target antenna on the basis of the state of non-contact power supply by the transmission antennas 11.

In the example of FIG. 5, the area where the reception antenna X (211) faces the transmission antenna B (11b) is larger than the area where the reception antenna X (211) faces the transmission antenna A (11a). Thus, with regards to the high-frequency power that the power transmission control device 10 supplies to each of the transmission antennas 11, the high-frequency power supplied to the transmission antenna 11B (11b) is greater than the high-frequency power supplied to the transmission antenna 11A (11a). That is, the state of non-contact power supply to the reception antenna X (211) is better for the transmission antenna B (11b) than for the transmission antenna A (11 a).

The antenna determination unit 1043 determines the transmission antenna B (11b), which has a relatively better non-contact power supply state, as the power transmission target antenna.

The antenna determination unit 1043 outputs information of the determined power transmission target antenna to the antenna control unit 1041.

Specifically, for example, the antenna determination unit 1043 assigns a power transmission target flag to information of each of the transmission antennas 11 that the power transmission control device 10 internally has. The antenna control unit 1041 determines whether or not a transmission antenna 11 is a power transmission target antenna on the basis of the power transmission target flag.

The antenna control unit 1041 causes the power transmission unit 1042 to continue to supply the high-frequency power to the power transmission target antenna determined by the antenna determination unit 1043 in step ST405 and to stop the supply of the high-frequency power to transmission antennas 11 other than the power transmission target antenna (step ST406).

As a result, power is supplied from the power transmission target antenna to the power receiving appliance 2 to which the power is to be actually supplied, whereas the supply of high-frequency power to transmission antennas 11 other than the power transmission target antenna is stopped, thereby preventing unnecessary radiation of electromagnetic waves.

The foreign matter detecting unit 103 detects foreign matter present between the power transmission device 1 and the power reception device 21 on the basis of the supply state of high-frequency power to the power transmission target antenna while the power transmission unit 1042 is supplying high-frequency power to the power transmission target antenna (step ST407).

In step ST407, the foreign matter detecting unit 103 outputs information indicating that foreign matter has been detected to the power transmission controlling unit 104 when the foreign matter is detected ("YES" in step ST407).

The antenna control unit 1041 of the power transmission controlling unit 104 outputs an error signal to the communication unit 105 (step ST410) and proceeds to step ST409.

When the error signal is output from the antenna control unit 1041, the error notification unit 1052 of the communication unit 105 transmits the error signal to the power receiving appliance 2.

In the power receiving appliance 2, the error reception unit 222 of the communication unit 22 receives the error signal and outputs the error signal to the control unit 24. When the error signal is output from the error reception unit 222, the control unit 24 causes the output unit 23 to output error information. Note that the control unit 24 temporarily outputs the error information. It is assumed that the time when the error information is output is set in advance.

Note that the antenna control unit 1041 initializes the power transmission target flag assigned to the power transmission target antenna for which foreign matter has been detected between the power reception device 21 and the power transmission target antenna when information indicating that the foreign matter has been detected is output from the foreign matter detecting unit 103.

If the foreign matter detecting unit 103 detects foreign matter in step ST407, and the antenna control unit 1041 outputs an error signal to the communication unit 105, then, in step ST409, the antenna control unit 1041 causes the power transmission unit 1042 to stop the supply of high-frequency power to transmission antennas 11 other than the power transmission target antenna. The antenna control unit 1041 is only required to determine whether or not a transmission antenna 11 is a power transmission target antenna on the basis of a power transmission target flag.

Here, the operation of step ST407 to step ST410 will be described with a specific example.

For example, let us assume that four power receiving appliances 2 are installed on a floor and that a DVD as foreign matter is caught under one of the four power receiving appliances 2. In this case, response signals are transmitted from only three power reception devices 21. However, as described above, the response reception unit 1051 cannot determine which response signal is a response transmitted from which power receiving appliance 2. That is, the power transmission control device 10 cannot determine which power transmission target antenna is performing unnecessary non-contact power supply to the DVD.

Therefore, in the power transmission control device 10, the foreign matter detecting unit 103 performs foreign matter detection in step ST407 after the "steady power transmission process" is started, and if foreign matter is detected, the power transmission controlling unit 104 stops the supply of high-frequency power to transmission antennas 11 other than the power transmission target antennas. Note that, as for the transmission antenna 11 in which foreign matter is detected, the power transmission target flag is initialized by the antenna control unit 1041 so that the transmission antenna 11 is not determined as a power transmission target antenna.

At this point, error information is temporarily output in the power receiving appliance 2, and thus a user detects that an error is occurring and that no power is supplied to the power receiving appliance 2, and turns on the switch 3 again for example by removing the foreign matter. Then, the processes of step ST401 and subsequent steps are performed again.

As described above, since the power transmission control device 10 detects foreign matter during the "steady power transmission process", it is possible to reduce the possibility of, for example, a skin burn of a user, deformation, melting, combustion, or a breakage of the foreign matter, or outbreak of a fire due to ignition of the foreign matter because of overheating of the foreign matter with continued power supply to the foreign matter.

In contrast, in step ST407, if the foreign matter detecting unit 103 detects no foreign matter ("NO" in step ST407), the process proceeds to step ST408.

In the power receiving appliance 2 to which the non-contact power supply is performed, the control unit 24 causes the output unit 23 to output information indicating the power supply state depending on the power supply state from the power transmission device 1.

Here, for example, assuming that the output unit 23 is an LED level meter including three LEDs (a first LED, a second LED, and a third LED), the control unit 24 controls lighting of the three LEDs on the basis of the power supply states corresponding to power measurement values.

For example, assuming that 1000 watts is provided as the power supplied from the power transmission device 1, the control unit 24 turns on different LEDs for each of cases where the power measurement value reaches 1000 watts (defined as a first state), where the power measurement value is more than or equal to 500 watts and less than 1000 watts (defined as a second state), where the power measurement value is more than or equal to 200 watts and less than 500 watts (defined as a third state), and where the power measurement value is less than 200 watts (defined as a fourth state).

Specifically, the control unit 24 turns on all the first to third LEDs in the first state, turns on only the first and second LEDs in the second state, turns on only the first LED in the third state, and in the fourth state, none of the LEDs is turned on.

In a case where the reception antenna 211 is installed across multiple transmission antennas 11 as in the example of FIG. 5 described above, the power receiving appliance 2 is not supplied with the power that is provided as the power supplied from the power transmission device 1, and thus, for example, one or two out of the first to third LEDs are lit up.

A user can instantly grasp whether the power is supplied or the power supply status that the power is being supplied but is not sufficient by looking at the lighting state of the output unit 23.

In addition, the user can grasp the relative position between the power transmission device 1 and the power receiving appliance 2 from the lighting state of the output unit 23.

For example, if the user checks the lighting state of the output unit 23 and determines that the power receiving appliance 2 is supplied with power but not sufficiently, the user moves the power receiving appliance 2 to a position where power is sufficiently supplied.

Let us refer back to the flowchart of FIG. 4.

The antenna control unit 1041 determines whether or not the power transmission target antenna is performing non-contact power supply to the power reception device 21 (step ST408).

The antenna control unit 1041 is only required to determine whether or not the power transmission target antenna is performing non-contact power supply to the power reception device 21 on the basis of the voltage level or the current level of the high-frequency power output from the high-frequency inverter circuit 102.

In step ST408, when the antenna control unit 1041 determines that the power transmission target antenna is performing non-contact power supply to the power reception device 21 ("YES" in step ST408), the process returns to step ST405 and the "steady power transmission process" is repeated. Specifically, the antenna control unit 1041 causes the power transmission unit 1042 to continue the current supply of high-frequency power to the power transmission target antenna.

Thus, the power transmission unit 1042 continues to supply high-frequency power to the power transmission target antenna and continues to stop the high-frequency power to transmission antennas 11 other than the power transmission target antenna.

Thereafter, high-frequency power is supplied to the power transmission target antenna, and the "steady power transmission process" of step ST405 and subsequent steps is repeated as long as no abnormality occurs such as foreign matter detection.

On the other hand, when the antenna control unit 1041 determines in step ST408 that the power transmission target antenna is not performing non-contact power supply to the power reception device 21 ("NO" in step ST408), the antenna control unit 1041 determines that an abnormality has occurred in the state of the non-contact power supply, and the process proceeds to step ST410. Note that in a case where there are multiple power transmission target antennas, the antenna control unit 1041 determines that the power transmission target antennas are not performing non-contact power supply to the power reception device 21 if it determines that any one of the power transmission target antennas is not performing non-contact power supply to the power reception device 21.

At this point, the antenna control unit 1041 initializes the power transmission target flags assigned to the power transmission target antennas that are determined to be not performing non-contact power supply to the power reception device 21.

For example, let as assume that the user has moved the power receiving appliance 2 and that the installation position of the power receiving appliance 2 has changed. Then, the relative position between the power transmission device 1 and the power receiving appliance 2 changes, which may disable non-contact power supply from the power transmission device 1 to the power reception device 21 of the power receiving appliance 2. The antenna control unit 1041 determines that the non-contact power supply from the power transmission device 1 to the power reception device 21 has been stopped.

After proceeding to step ST410, the antenna control unit 1041 outputs an error signal to the communication unit 105 (step ST410). Then, the antenna control unit 1041 causes the power transmission unit 1042 to stop the supply of high-frequency power to the power transmission target antenna (step ST409).

The user recognizes that an error is occurring and that power supply to the power receiving appliance 2 has been stopped, and the user turns on the switch 3 again, for example, after moving the power receiving appliance 2 into an area where power can be supplied from any of the transmission antennas 11 if the current position of the power receiving appliance 2 is outside the area, or while the power receiving appliance 2 is left in the position if the current position of the power receiving appliance 2 is in the area where power can be supplied. Then, the processes of step ST401 and subsequent steps are performed again.

Note that although the operation is performed in the order of steps ST405 to ST407 in the above description, the operation of step ST407 may be performed before step ST405 and step ST406.

The operation of the power transmission control device 10 has been described above assuming that power transmission control device 10 is activated for the first time after installation.

Hereinafter, the operation in a case where the power transmission control device 10 is activated for the second time or more after installation will be described.

In a case where the power transmission control device 10 is activated for the second time or more, and there are already one or more power receiving appliances 2 to which non-contact power supply is already performed from one or more power transmission target antennas when the activation control unit 101 outputs an activation signal to cause the power transmission unit 1042 to supply high-frequency power to the transmission antennas 11, the antenna control unit 1041 of the power transmission controlling unit 104 keeps the power transmission target antenna as the power transmission target antenna and causes the power transmission unit 1042 to supply high-frequency power to transmission antennas 11 other than the power transmission target antenna (steps ST401 to ST402). The antenna control unit 1041 is only required to specify the power transmission target antenna on the basis of, for example, a power transmission target flag.

As described by referring to FIG. 4, the power transmission control device 10 according to the first embodiment continues the supply of high-frequency power for a power transmission target antenna once so determined unless an abnormal event occurs such as detection of foreign matter or that non-contact power supply to the power reception device 21 becomes impossible since the power receiving appliance 2 is moved.

As described above, in the non-contact power supply system 1000, the power transmission control device 10 first supplies high-frequency power to the transmission antennas 11 when the switch 3 is turned on from the OFF state, and when it is determined that the supply of high-frequency power is not necessary, the high-frequency power is not supplied to unnecessary transmission antennas 11 before the switch 3 in the OFF state is turned on again. That is, unlike in the related art described above, power transmission does not need to be performed at regular time intervals. As a result, it is possible to reduce periodic unnecessary radiation of electromagnetic waves to an area where no power receiving appliance 2 is installed. This can reduce the possibility that unnecessary electromagnetic waves may affect a power receiving appliance 2 installed in the vicinity of the electromagnetic waves.

Furthermore, in the above-described related art, the power receiving appliance 2 needs to include a battery in preparation to a cutoff of the power supply at regular time intervals in a case where a power receiving appliance 2 that requires constant power supply is installed facing the non-contact power supply unit.

On the other hand, in the power transmission control device 10 according to the first embodiment, the supply of high-frequency power to the power transmission target antenna once determined is continued unless an abnormality occurs in the power supply environment to a power receiving appliance 2. Thus, a power receiving appliance 2 can be continuously used by being supplied with power from the power transmission device 1 even without a battery.

Furthermore, in the above-described related art, whether or not the non-contact power reception unit is disposed so as to face the non-contact power supply unit is detected depending on a change in the impedance on the power receiving side viewed from the non-contact power supply unit only when power transmission from the non-contact power supply unit to the power receiving side is made to perform the power transmission during normal power supply operation at regular time intervals.

In this case, for example even when a state occurs in which foreign matter is caught between the non-contact power reception unit and the non-contact power supply unit during normal power supply operation, there is a possibility that power transmission is successively continued. If continuous power transmission is continued with foreign matter interposed, there is a possibility that lines of magnetic force pass through the foreign matter to cause an overcurrent to flow, thereby generating heat in the foreign matter. A high temperature of the foreign matter may result in, for example, a skin burn of a user, deformation, melting, combustion, or a breakage of the foreign matter, or outbreak of a fire due to ignition of the foreign matter.

On the other hand, the power transmission control device 10 according to the first embodiment detects foreign matter during the steady power transmission process, it is possible to reduce the possibility of, for example, a skin burn of a user, deformation, melting, combustion, or a breakage of the foreign matter, or outbreak of a fire due to ignition of the foreign matter because of overheating of the foreign matter.

The power transmission control device 10 according to the first embodiment does not detect the impedance as viewed from the power receiving side when a power transmission target antenna is determined, and thus the circuit size is not increased even in high-frequency transmission in the bandwidth of several MHz or higher, thereby making it possible to reduce the size and cost of the device.

Moreover, since the power transmission control device 10 according to the first embodiment includes the foreign matter detecting unit 103, and the foreign matter detection operation is completed in the power transmission control device 10, foreign matter can be detected regardless of whether or not a power reception device 21 is present in an area where the power transmission control device 10 can supply power via the transmission antenna 11.

Also, for example, technology for performing non-contact power supply to a smartphone is known in the related art; however, in this technology, it is necessary for a battery mounted on the smartphone to perform the operation of authenticating the smartphone, which is performed on the power transmission device side, when the smartphone is placed over the power transmission device. That is, in the related art, a battery is necessary for a power receiving appliance itself that receives non-contact power supply.

On the other hand, in the non-contact power supply system 1000 according to the first embodiment, the power transmission control device 10 can perform authentication of a power receiving appliance 2 by the power supplied by non-contact power supply that has been started by the power receiving appliance 2 in conjunction with the switch 3 of the lighting or the like. Therefore, no battery is required on the power receiving appliance 2 side.

Furthermore, in the non-contact power supply system 1000 according to the first embodiment, the switch 3 of the lighting device and the power transmission control device 10 work together. Since the switch 3 of the lighting device is operated by a user several times a day in general, and thus the non-contact power supply system 1000 can execute the "activation process" while the user is not particularly aware.

In addition, since the switch 3 of the lighting device is generally located at a position where the user can easily operate, it is facilitated for the user to intentionally cause the non-contact power supply system 1000 to execute the "activation process".

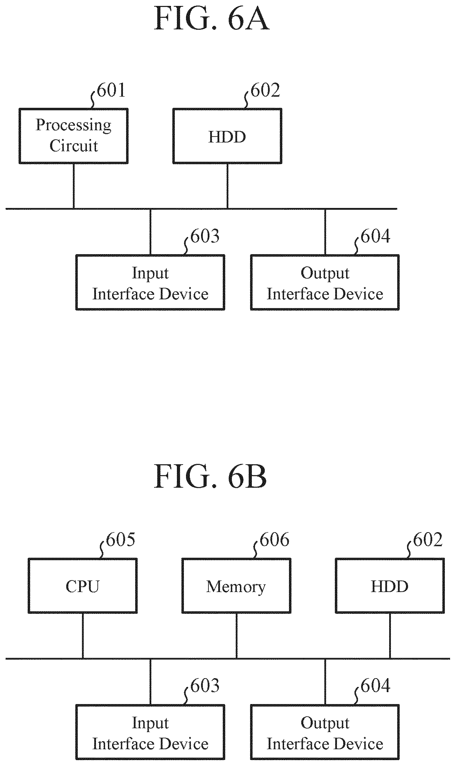

FIGS. 6A and 6B are diagrams each illustrating an exemplary hardware configuration of the power transmission control device 10 according to the first embodiment.

In the first embodiment, the functions of the activation control unit 101, the foreign matter detecting unit 103, the power transmission controlling unit 104, and the communication unit 105 are implemented by a processing circuit 601. That is, the power transmission control device 10 includes a processing circuit 601 for determining a power transmission target antenna for supplying high-frequency power to the power reception device 21 included in a power receiving appliance 2 when the switch 3 is turned on, performing power supply via the power transmission target antenna, and performing control to stop the supply of high-frequency power to transmission antennas 11 other than the power transmission target antenna.

The processing circuit 601 may be dedicated hardware as illustrated in FIG. 6A or may be a central processing unit (CPU) 605 for executing a program stored in a memory 606 as illustrated in FIG. 6B.

In a case where the processing circuit 601 is dedicated hardware, the processing circuit 601 corresponds to, for example, a single circuit, a composite circuit, a programmed processor, a parallel programmed processor, an application specific integrated circuit (ASIC), a field-programmable gate array (FPGA), or a combination thereof.

In a case where the processing circuit 601 is the CPU 605, the functions of the activation control unit 101, the foreign matter detecting unit 103, the power transmission controlling unit 104, and the communication unit 105 are implemented by software, firmware, or a combination of software and firmware. That is, the activation control unit 101, the foreign matter detecting unit 103, the power transmission controlling unit 104, and the communication unit 105 are implemented by the CPU 605 that executes programs stored in a hard disk drive (HDD) 602, the memory 606, or the like or a processing circuit such as a system large-scale integration (LSI). It is also understood that programs stored in the HDD 602, the memory 606, and the like cause a computer to execute the procedures and methods of the activation control unit 101, the foreign matter detecting unit 103, the power transmission controlling unit 104, and the communication unit 105. Here, the memory 606 may be a nonvolatile or volatile semiconductor memory such as a random access memory (RAM), a read only memory (ROM), a flash memory, an erasable programmable read only memory (EPROM), or an electrically erasable programmable read only memory (EEPROM), a magnetic disc, a flexible disc, an optical disc, a compact disc, a mini disc, a digital versatile disc (DVD), or the like.

Note that some of the functions of the activation control unit 101, the foreign matter detecting unit 103, the power transmission controlling unit 104, and the communication unit 105 may be implemented by dedicated hardware with another part thereof implemented by software or firmware. For example, the function of the activation control unit 101 may be implemented by the processing circuit 601 as dedicated hardware, and the functions of the foreign matter detecting unit 103, the power transmission controlling unit 104, and the communication unit 105 may be implemented by the processing circuit reading and executing a program stored in the memory 606.

The power transmission control device 10 also includes an input interface device 603 and an output interface device 604 that communicate with the switch 3, the power receiving appliances 2, and the like.

The power transmission control device 10 further includes the high-frequency inverter circuit 102 (not illustrated in FIGS. 6A and 6B).

The power receiving appliances 2 according to the first embodiment also has a hardware configuration as illustrated in FIG. 6A or 6B. An exemplary hardware configuration of the power receiving appliance 2 according to the first embodiment will be described by referring to FIGS. 6A and 6B.

In the first embodiment, the functions of the communication unit 22 and the control unit 24 are implemented by the processing circuit 601. That is, the power receiving appliance 2 includes the processing circuit 601 for causing the power transmission device 1 to transmit an activation signal for causing high-frequency power to be supplied to the multiple transmission antennas 11 and controlling to operate using the power supplied from the power transmission device 1.

The processing circuit 601 may be dedicated hardware as illustrated in FIG. 6A or may be a central processing unit (CPU) 605 for executing a program stored in the memory 606 as illustrated in FIG. 6B.

In a case where the processing circuit 601 is dedicated hardware, the processing circuit 601 corresponds to, for example, a single circuit, a composite circuit, a programmed processor, a parallel programmed processor, an application specific integrated circuit (ASIC), a field-programmable gate array (FPGA), or a combination thereof.

In a case where the processing circuit 601 is the CPU 605, the functions of the communication unit 22 and the control unit 24 are implemented by software, firmware, or a combination of software and firmware. That is, the functions of the communication unit 22 and the control unit 24 are implemented by the CPU 605 that executes programs stored in a hard disk drive (HDD) 602, the memory 606, or the like or a processing circuit such as a system large-scale integration (LSI). It is also understood that programs stored in the HDD 602, the memory 606, and the like cause a computer to execute the procedures and methods of the communication unit 22 and the control unit 24. Here, the memory 606 may be a nonvolatile or volatile semiconductor memory such as a random access memory (RAM), a read only memory (ROM), a flash memory, an erasable programmable read only memory (EPROM), or an electrically erasable programmable read only memory (EEPROM), a magnetic disc, a flexible disc, an optical disc, a compact disc, a mini disc, a digital versatile disc (DVD), or the like.

Note that some of the functions of the communication unit 22 and the control unit 24 may be implemented by dedicated hardware, and another part thereof may be implemented by software or firmware. For example, the function of the communication unit 22 may be implemented by the processing circuit 601 as dedicated hardware, and the function of the control unit 24 may be implemented by the processing circuit reading and executing a program stored in the memory 606.

In addition, the power receiving appliance 2 includes the input interface device 603 and the output interface device 604 that communicate with an external device such as the power transmission device 1.

The power receiving appliance 2 also includes the reception antenna 211 (not illustrated in FIGS. 6A and 6B).

The power receiving appliance 2 further includes an output device (not illustrated in FIGS. 6A and 6B). The output device is a display, a level meter, a speech output device, or the like.

As described above, according to the first embodiment, the power transmission control device 10 includes: the power transmission unit 1042 for starting power supply to the multiple transmission antennas 11 in conjunction with the external switch (switch 3) when the external switch is operated; and the antenna determination unit 1043 for determining a power transmission target antenna, to which the power supply from the power transmission unit 1042 is to be continued, from among the multiple transmission antennas 11 to which the power supply has been started. Therefore, it is possible to reduce unnecessary radiation of electromagnetic waves to an area where no power receiving appliance 2 to be supplied with power from the power transmission device 1 is installed. This can reduce the possibility that unnecessary electromagnetic waves may affect a power receiving appliance 2 installed in the vicinity of the electromagnetic waves.

Also, in the power transmission control device 10, the antenna control unit 1041 causes the power transmission unit 1042 to supply power to the power transmission target antenna, and then to maintain the state of supplying power to the power transmission target antenna until the external switch is operated again while maintaining the state of halting the power supply to transmission antennas other than the power transmission target antenna.

The supply of high-frequency power to the power transmission target antenna once determined is continued unless an abnormality occurs in the power supply environment to the power receiving appliance 2, and thus the power receiving appliance 2 can be used continuously with the power supply from the power transmission device 1 even without a battery.

The activation control unit 101 of the power transmission control device 10 outputs an activation signal when the external switch is turned on. The non-contact power supply to the power receiving appliance 2 is started in conjunction with the switch 3, and the power receiving appliance 2 is authenticated by the power supplied by the non-contact power supply, and thus the power receiving appliance 2 does not require a battery.

In addition, since the power transmission control device 10 detects foreign matter during the steady power transmission process, it is possible to reduce the possibility of, for example, a skin burn of a user, deformation, melting, combustion, or a breakage of the foreign matter, or outbreak of a fire due to ignition of the foreign matter because of overheating of the foreign matter.

Furthermore, the power transmission control device 10 includes the foreign matter detecting unit 103 for detecting foreign matter present between a transmission antenna and a reception antenna 211 included in a power receiving appliance 2 on the basis of the power supply state to the power transmission target antenna while the power transmission unit 1042 is supplying power to the power transmission target antenna, and the antenna control unit 1041 causes the power transmission unit 1042 to stop the supply of power to the power transmission target antenna when the foreign matter detecting unit 103 detects foreign matter.

Since the foreign matter detection operation is completed in the power transmission control device 10, foreign matter can be detected regardless of whether or not the power reception device 21 is present in an area where the power transmission control device 10 can supply power via the transmission antenna 11.

The power transmission control device 10 does not detect the impedance as viewed from the power receiving side when a power transmission target antenna is determined, and thus the circuit size is not increased even in high-frequency transmission in the bandwidth of several MHz or higher, thereby making it possible to reduce the size and cost of the device.

### Second Embodiment

In the first embodiment, in the non-contact power supply system 1000, the power transmission device 1 supplies high-frequency power from the single power transmission control device 10 to multiple transmission antennas 11.

In a second embodiment, an embodiment will be described in which a power transmission device 1 includes power transmission control devices 10 each corresponding to one of multiple transmission antennas 11.

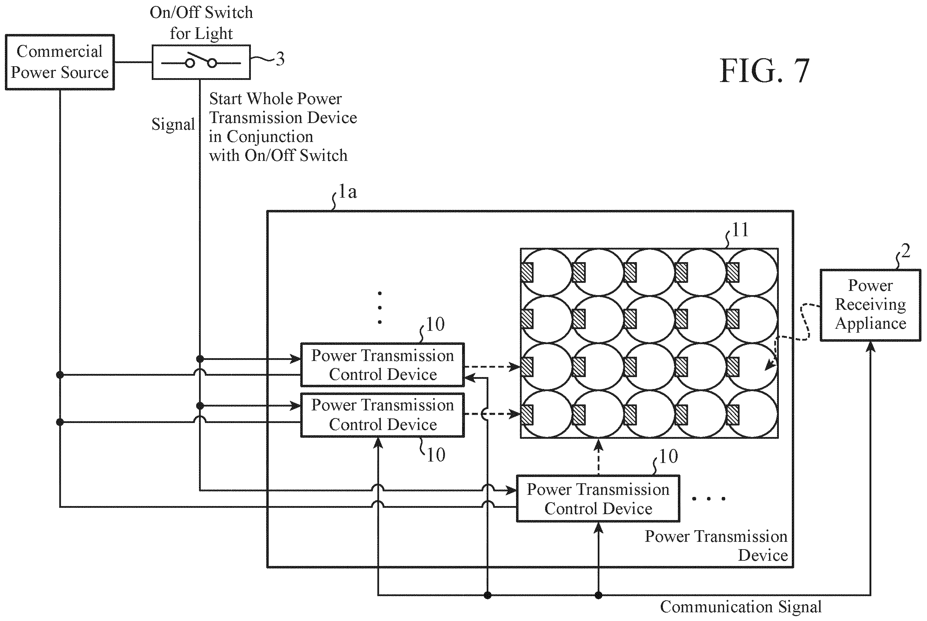

FIG. 7 is a diagram for describing a configuration example of a power transmission device 1a and a power receiving appliance 2 in a non-contact power supply system 1000 according to the second embodiment.

The non-contact power supply system 1000 according to the second embodiment is different from the non-contact power supply system 1000 according to the first embodiment in that the power transmission device 1a includes the power transmission control devices 10 each corresponding to one of the multiple transmission antennas 11. The power transmission control device 10 and the transmission antennas 11 are connected by, for example, cables.

Other configurations are similar to those of the non-contact power supply system 1000 according to the first embodiment, and thus redundant description will be omitted.

The specific configuration of each of the power transmission control devices 10 included in the power transmission device 1a is similar to the specific configuration of the power transmission control device 10 described by referring to FIG. 2B in the first embodiment, and thus redundant description is omitted.

Note that, in FIG. 7, components of each of the power transmission control devices 10 are not illustrated.

In FIG. 7, each of the power transmission control devices 10 is provided externally to the transmission antennas 11 and is coupled to a corresponding transmission antenna 11; however, the power transmission control devices 10 may be incorporated in the transmission antennas 11 to obtain integrated transmission antennas.

The operation of the power transmission control device 10 according to the second embodiment will be described.

Since the operation flow of the power transmission control device 10 according to the second embodiment is basically the same as the operation flow of the power transmission control device 10 described by referring to FIG. 4 in the first embodiment, the specific operation of the power transmission control device 10 according to the second embodiment will be described by referring to FIG. 4.

Note that, in the second embodiment, each of the power transmission control devices 10 performs the operation described below.

In the following description, the operation of the power transmission control device 10 will be described assuming that the power transmission device 1a is activated for the first time after installation.

The activation control unit 101 stands by until the switch 3 is turned on from the OFF state ("NO" in step ST401), and performs operations such as outputting an activation signal when the switch 3 is turned on ("YES" in step ST401). The specific operation is similar to the operation described in the first embodiment, and thus redundant description is omitted.

The antenna control unit 1041 of the power transmission controlling unit 104 causes the power transmission unit 1042 to supply high-frequency power to the corresponding transmission antenna 11 when the activation signal is output from the activation control unit 101 in step ST401 (step ST402).

Here, the antenna control unit 1041 determines whether or not the power transmission device 1a is activated normally (step ST403). The specific operation is similar to the operation described in the first embodiment, and thus redundant description is omitted.

If the antenna control unit 1041 determines that the power transmission device 1a is activated normally ("YES" in step ST403), the antenna control unit 1041 proceeds to step ST404.

If the antenna control unit 1041 determines that the power transmission device 1a is not activated normally ("NO" in step ST403), the antenna control unit 1041 causes the power transmission unit 1042 to stop the supply of high-frequency power (step ST409).

Note that, in step ST409, the supply of high-frequency power to the corresponding transmission antenna 11 performed by the power transmission unit 1042 is stopped.

The, the supply of the high-frequency power to the transmission antenna 11 remains turned off until the user turns on the switch 3 again which is in the OFF state (step ST401).

In step ST404, the response reception unit 1051 of the communication unit 105 determines whether or not a response signal transmitted from the power receiving appliance 2 has been received (step ST404).

In the second embodiment, the power receiving appliance 2 transmits a response signal to every power transmission control device 10.

Therefore, even when the response reception unit 1051 of a certain power transmission control device 10 receives a response signal, the response signal is not necessarily a response signal due to the non-contact power supply of the power receiving appliance 2 from the transmission antenna 11 to which the power transmission unit 1042 of the power transmission control device 10 has supplied high-frequency power in step ST402.

In step ST404, if the response reception unit 1051 has received no response signal ("NO" in step ST404), the process proceeds to step ST409.

In step ST404, if the response reception unit 1051 has received a response signal ("YES" in step ST404), the response reception unit 1051 outputs the received response signal to the power transmission controlling unit 104.

When a response signal is output from the response reception unit 1051 in step ST404, the antenna control unit 1041 starts the "steady power transmission process". Specifically, in a case where the corresponding transmission antenna 11 needs to be continuously supplied with high-frequency power, the antenna control unit 1041 starts a process for continuing the supply of high-frequency power to the transmission antenna 11 that the power transmission unit 1042 has been caused to perform in step ST402.

The antenna determination unit 1043 of the power transmission controlling unit 104 determines a power transmission target antenna depending on the response signal that the response reception unit 1051 has received from the power receiving appliance 2 in step ST404 (step ST405).

The specific operation of step ST405 is different from the specific operation of step ST405 described in the first embodiment.

In the second embodiment, the power transmission control device 10 supplies high-frequency power to only a single corresponding transmission antenna 11, and thus the antenna determination unit 1043 cannot determine whether or not the corresponding transmission antenna 11 is a power transmission target antenna through comparison with the supply state of high-frequency power to multiple transmission antennas 11.

Therefore, the antenna determination unit 1043 uses a preset threshold value (fourth threshold value) and determines whether or not the corresponding transmission antenna 11 is a power transmission target antenna depending on whether or not the voltage level or the current level for supplying high-frequency power to the corresponding transmission antenna 11 exceeds the fourth threshold value. Regarding the determination on whether or not the voltage level or the current level exceeds the fourth threshold value, a user can appropriately set settings as to whether the antenna determination unit 1043 determines that the voltage level or the current level exceeds the fourth threshold value or that the voltage level or the current level falls below the fourth threshold value.

Note that, in the second embodiment, it is assumed that each of the power transmission control devices 10 included in the power transmission device 1a is simultaneously activated. On this assumption, as described above, it is not possible to determine whether or not a transmission antenna 11 is a power transmission target antenna in comparison with the supply state of high-frequency power to the multiple transmission antennas 11, and the antenna determination unit 1043 determines a power transmission target antenna on the basis of the fourth threshold value. However, it is not limited thereto, and it is also possible to provide a time difference in the activation of each of the power transmission control devices 10 in the power transmission device 1a. In this case, it is possible to identify a power transmission state corresponding to a power receiving appliance 2 in the power transmission device 1a.

When the antenna determination unit 1043 determines that the corresponding transmission antenna 11 is a power transmission target antenna, the antenna control unit 1041 causes the power transmission unit 1042 to continue to supply high-frequency power to the power transmission target antenna. On the other hand, if the antenna determination unit 1043 does not determine the corresponding transmission antenna 11 as the power transmission target antenna, the antenna control unit 1041 causes the power transmission unit 1042 to stop the supply of high-frequency power to the corresponding transmission antenna 11 (step ST406).

The foreign matter detecting unit 103 detects foreign matter present between the power transmission device 1 and the power reception device 21 on the basis of the supply state of high-frequency power to the power transmission target antenna while the power transmission unit 1042 is supplying high-frequency power to the power transmission target antenna (step ST407).

In step ST407, the foreign matter detecting unit 103 outputs information indicating that foreign matter has been detected, to the power transmission controlling unit 104 when the foreign matter is detected ("YES" in step ST407).

The antenna control unit 1041 of the power transmission controlling unit 104 outputs an error signal to the communication unit 105 (step ST410).

When the error signal is output from the antenna control unit 1041, the error notification unit 1052 of the communication unit 105 transmits the error signal to the power receiving appliance 2.

In the power receiving appliance 2, the error reception unit 222 of the communication unit 22 receives the error signal and outputs the error signal to the control unit 24. In the second embodiment, a power receiving appliance 2 communicates with each of the power transmission control devices 10. In the power receiving appliance 2, the control unit 24 determines whether or not the voltage level supplied to the power reception device 21 is within a normal range when the error reception unit 222 receives an error signal output from each of the power transmission control devices 10. The control unit 24 can determine that no foreign matter is detected between the reception antenna 211 of the power receiving appliance 2 including the control unit 24 and the transmission antenna 11 if the voltage level supplied to the power reception device 21 is within the normal range. However, the control unit 24 cannot determine in which power receiving appliance 2 other than the power receiving appliance 2 including the control unit 24 the foreign matter has been detected between the reception antenna 211 and the transmission antenna 11. Thus, the control unit 24 causes the output unit 23 to output error information indicating that it is not possible to specify which transmission antenna 11 has detected foreign matter but indicating that foreign matter has been detected.

On the other hand, if the control unit 24 determines that the voltage level supplied to the power reception device 21 is below the normal range, the control unit 24 causes the output unit 23 to output error information indicating that foreign matter is detected between the reception antenna 211 of the power receiving appliance 2 including the control unit 24 and the transmission antenna 11.

Note that, as described above, in a case where each of the power transmission control devices 10 is activated with time lags in the power transmission device 1a, the power receiving appliance 2 can identify the power transmission state from the power transmission device 1a corresponding to the power receiving appliance 2, and thus the control unit 24 can specify which power receiving appliance 2 has detected foreign matter between the reception antenna 211 and the transmission antenna 11 even when the voltage level supplied to the power reception device 21 is within the normal range.

The control unit 24 also temporarily outputs the error information. It is assumed that the time when the error information is output is set in advance.

Also, in the second embodiment, in a power receiving appliance 2, when error information is temporarily output, the control unit 24 transmits information indicating that an error is occurring to the communication unit 105 of each of the power transmission control devices 10. Specifically, the control unit 24 transmits information indicating that it is not possible to specify which transmission antenna 11 has detected foreign matter but indicating that an error is occurring because of the detection of the foreign matter. Alternatively, the control unit 24 outputs, to the communication unit 105 of the power transmission control device 10 that supplies high-frequency power to the corresponding transmission antenna 11, information indicating that an error is occurring due to detection of foreign matter between the reception antenna 211 of the power receiving appliance 2 including the control unit 24 and the transmission antenna 11. As described above, there are two types of information, which indicates occurrence of an error, transmitted from the control unit 24 to the communication unit 105 of each of the power transmission control devices 10.

The power transmission control device 10 stops the supply of the high-frequency power if high-frequency power is supplied to a power transmission target antenna when the communication unit 105 receives information indicating that an error is occurring, from a power receiving appliance 2.

Specifically, in a case where the power receiving appliance 2 transmits information indicating that it is not possible to specify which transmission antenna 11 has detected foreign matter but indicating that an error is occurring because of the detection of the foreign matter, the supply of high-frequency power is stopped in all the power transmission control devices 10. That is, in a case where non-contact power supply is performed from a transmission antenna 11 to the power reception device 21 and it is determined on the power receiving appliance 2 side that the voltage level of the power supplied to the power reception device 21 is within the normal range, in all the power transmission control devices 10, the supply of high-frequency power is stopped. However, in a case where the transmission antenna 11 has already been determined as the power transmission target antenna, the power transmission control device 10 does not stop the supply of the high-frequency power to the power transmission target antenna.

On the other hand, in a case where the power receiving appliance 2 transmits information indicating that an error is occurring due to detection of foreign matter between the reception antenna 211 included in the power receiving appliance 2 and a transmission antenna 11, in the power transmission control device 10 that supplies high-frequency power to the transmission antenna 11 corresponding to the reception antenna 211 included in the power receiving appliance 2, the supply of the high-frequency power is stopped.

In step ST407, if the foreign matter detecting unit 103 detects no foreign matter ("NO" in step ST407) and no information, indicating that an error is occurring, is received from the power receiving appliance 2, the process proceeds to step ST408.

The antenna control unit 1041 determines whether or not the power transmission target antenna is performing non-contact power supply to the power reception device 21 (step ST408).

Note that, in the second embodiment, if the corresponding transmission antenna 11 is not a power transmission target antenna, step ST408 is skipped and the process returns to step ST401.

In step ST408, if the antenna control unit 1041 determines that the power transmission target antenna is performing non-contact power supply to the power reception device 21 ("YES" in step ST408), the process returns to step ST405 and the "steady power transmission process" is repeated.

Therefore, the power transmission unit 1042 continues to supply high-frequency power to the power transmission target antenna if the corresponding transmission antenna 11 is a power transmission target antenna, and keeps halting the supply of high-frequency power to the transmission antenna 11 if the corresponding transmission antenna 11 is not a power transmission target antenna ("NO" in step ST408).

Then, the steady power transmission process from step ST405 is repeated.

On the other hand, if the antenna control unit 1041 determines in step ST408 that the power transmission target antenna is not performing non-contact power supply to the power reception device 21 ("NO" in step ST408), the antenna control unit 1041 outputs an error signal to the communication unit 105 (step ST410).

When the error signal is output from the antenna control unit 1041, the error notification unit 1052 of the communication unit 105 transmits the error signal to the power receiving appliance 2.

In the power receiving appliance 2, the error reception unit 222 of the communication unit 22 receives the error signal and outputs the error signal to the control unit 24. The control unit 24 temporarily outputs the error information. The specific operation in which the control unit 24 temporarily outputs error information is similar to the above-described case in which an error signal indicating detection of foreign matter is output from the antenna control unit 1041 of the power transmission controlling unit 104, and thus duplicate description will be omitted.

The control unit 24 also transmits information indicating that an error is occurring to the communication unit 105 of each of the power transmission control devices 10 when error information is temporarily output. The specific operation in which the control unit 24 transmits information indicating that an error is occurring to the communication unit 105 is similar to the above-described case in which an error signal indicating detection of foreign matter is output from the antenna control unit 1041 of the power transmission controlling unit 104, and thus duplicate description will be omitted.

The power transmission control device 10 stops the supply of the high-frequency power if high-frequency power is supplied to a power transmission target antenna when the communication unit 105 receives information indicating that an error is occurring, from a power receiving appliance 2. In the power transmission control device 10, the specific operation of stopping the supply of high-frequency power is similar to the above-described case in which an error signal indicating detection of foreign matter is output from the antenna control unit 1041 of the power transmission controlling unit 104, and thus duplicate description will be omitted.

In a case where the power receiving appliance 2 cannot identify a power receiving appliance 2 to which non-contact power supply to the power reception device 21 is not performed, the supply of high-frequency power is stopped in all the power transmission control devices 10. Alternatively, in a case where the power receiving appliance 2 can identify a power receiving appliance 2 to which non-contact power supply to the power reception device 21 is not performed, the supply of the high-frequency power is stopped only in the power transmission control device 10 that is supplying the high-frequency power to the transmission antenna 11 corresponding to the reception antenna 211 of the power reception device 21 to which non-contact power supply is not performed.

Here, it is assumed that the power transmission target antenna becomes unable to perform non-contact power supply to the power reception device 21 of the power receiving appliance 2 due to reasons such as that the power receiving appliance 2 has been moved. In this case, on the power receiving appliance 2 side, the voltage level of the power supplied to the power reception device 21 becomes lower than the normal range, and the control unit 24 can determine that non-contact power supply is no longer performed in the power receiving appliance 2 that includes the control unit 24. Therefore, the supply of the high-frequency power is stopped only in the power transmission control device 10 that is supplying the high-frequency power to the transmission antenna 11 corresponding to the reception antenna 211 of the power reception device 21 to which the non-contact power supply is not performed.

The operation of the power transmission control device 10 has been described above assuming that the power transmission control device 10 is activated for the first time after installation.

Hereinafter, the operation in a case where the power transmission control device 10 is activated for the second time or more after installation will be described.

In a case where the power transmission control device 10 is activated for the second time or more after installation, and the corresponding transmission antenna 11 is already a power transmission target antenna, the antenna control unit 1041 of the power transmission controlling unit 104 keeps the power transmission target antenna as the power transmission target antenna when an activation signal is output from the activation control unit 101 to cause the power transmission unit 1042 to supply high-frequency power to the corresponding transmission antenna 11. Then, the power transmission control device 10 ends the "activation process" and skips steps ST403 to ST404 to proceed to step ST405.

If the corresponding transmission antenna 11 is not a power transmission target antenna, the antenna control unit 1041 causes the power transmission unit 1042 to supply high-frequency power to the transmission antenna 11 (steps ST401 to ST402).

As described above, in the non-contact power supply system 1000 according to the second embodiment, the power transmission device 1a includes the power transmission control devices 10 each corresponding to one of the multiple transmission antennas 11.

As compared with the power transmission device 1 of the non-contact power supply system 1000 according to the first embodiment, the configuration of the power transmission device 1a becomes complicated, which causes an increase in the number of components because it is necessary to include multiple power transmission control devices 10. However, in the non-contact power supply system 1000 that presumes high-frequency power transmission, it is possible to set the operation characteristics of a power transmission control device 10 in correspondence to the input impedance of each of the transmission antennas 11, and thus high-frequency properties such as a reduced power loss can be obtained.

As described above, according to the second embodiment, the non-contact power supply system 1000 includes the power transmission control devices 10 each corresponding to one of the multiple transmission antennas 11. Therefore, in the non-contact power supply system 1000 that presumes high-frequency power transmission, it is possible to set the operation characteristics of a power transmission control device 10 in correspondence to the input impedance of each of the transmission antennas 11, and thus high-frequency properties such as a reduced power loss can be obtained.

In the first and second embodiments described above, the non-contact power supply system 1000 employs a resonance-type non-contact power supply system; however, without limiting thereto, for example an electromagnetic induction type may be employed.

Note that, for example in a case where an electromagnetic induction type is employed in a non-contact power supply system, no power is supplied from the power transmission device unless a power receiving appliance is disposed facing the power transmission device. Therefore, in such cases where the power transmission device is installed under the floor or the like, it is necessary to provide an indication or the like to show the installation position of the power transmission device on the floor surface so that the position of the power transmission device becomes clear.

On the other hand, in the resonance-type non-contact power supply scheme, as described above, the relative position between the power transmission device and the power receiving appliance is output in a case where the power transmission device is not in a position facing the power receiving appliance, and a user can search the installation position of the power receiving appliance in order to install the power receiving appliance at a position where the power supply efficiency will be improved. For this reason, it is not necessary to provide an indication or the like to show the installation position of the power transmission device on the floor surface, thereby preventing the design of the floor from being affected.

In the first and second embodiments, it is not possible to specify which power receiving appliance 2 has transmitted a response signal on the basis of the response signal that the response reception unit 1051 of the power transmission control device 10 receives from the power receiving appliance 2.

However, for example, the power receiving appliance 2 can also transmit a response signal by assigning a preset standard code to the power receiving appliance 2. In this case, the power transmission control device 10 can identify the power receiving appliance 2 that has transmitted the response signal on the basis of the standard code.

If the power transmission control device 10 can identify the power receiving appliance 2, it is also possible to determine the power that is typically consumed by the power receiving appliance 2.

Then, the power transmission control device 10 can determine which transmission antenna 11 is to be caused to continue to supply the high-frequency power as a power transmission target antenna corresponding to which power receiving appliance 2 on the basis of the supply state of the high-frequency power to the transmission antenna 11 and the power that is typically consumed.

In the first and second embodiments described above, the power transmission control device 10 includes the activation control unit 101, the high-frequency inverter circuit 102, the foreign matter detecting unit 103, the communication unit 105, and the power transmission controlling unit 104; however, these components are not essential. The power transmission control device 10 is only required to include at least the power transmission unit 1042 and the antenna determination unit 1043.

Moreover, in the second embodiment described above, the power transmission device 1a includes the power transmission control devices 10 as illustrated in FIG. 2B corresponding to each of the multiple transmission antennas 11; however, this is merely an example. In the second embodiment, it is only required that the power transmission device 1a includes, corresponding to each of the multiple transmission antennas 11, at least the high-frequency inverter circuit 102, the activation control unit 101, the power transmission unit 1042, the response reception unit 1051, the antenna determination unit 1043, and the antenna control unit 1041.

In the first and second embodiments, the power transmission control device 10 starts processing such as activation of the transmission antennas 11 described above in conjunction with the operation of the switch 3 when the user turns on the switch 3. However, this is merely an example, and for example, the power transmission control device 10 may start processing such as activation of the transmission antennas 11 in conjunction with the operation of the switch 3 when the user turns off the switch 3 in the first and second embodiments. Further, for example in the first and second embodiments, the power transmission control device 10 may start processes such as activation of the transmission antennas 11 in conjunction with the operation of the switch 3 in both cases where the user turns on the switch 3 and turns off the switch 3.

Note that, within the scope of the present invention, the present invention may include a flexible combination of each of the embodiments, a modification of any component of each of the embodiments, or an omission of any component in each of the embodiments.

### INDUSTRIAL APPLICABILITY

A power transmission control device according to the present invention can reduce unnecessary radiation of electromagnetic waves to an area where no power receiving appliance to be supplied with power from a power transmission device is installed in a non-contact power supply system, and thus is applicable to, for example, a power transmission control device used in a non-contact power supply system in a structure where multiple power receiving appliances can be installed.

### REFERENCE SIGNS LIST

1,1a: power transmission device, 2: power receiving appliance, 2a: television, 2b: desk lamp, 3: switch, 10: power transmission control device, 11: transmission antenna, 101: activation control unit, 102: high-frequency inverter circuit, 103: foreign matter detecting unit, 104: power transmission controlling unit, 1041: antenna control unit, 1042: power transmission unit, 1043: antenna determination unit, 105: communication unit, 1051: response reception unit, 1052: error notification unit, 21: power reception device, 211: reception antenna, 22: communication unit, 221: response transmission unit, 222: error reception unit, 23: output unit, 24: control unit, 601: processing circuit, 602: HDD, 603: input interface device, 604: output interface device, 1000: non-contact power supply system

## Claims

1. A power transmission control device for non-contact power supply, the power transmission control device comprising:
a power transmission unit for starting power supply to multiple transmission antennas in conjunction with an external switch when the external switch is operated; and
an antenna determination unit for determining a power transmission target antenna with which the power supply from the power transmission unit is to be continued, from among the multiple transmission antennas to which the power supply has been started.

2. The power transmission control device for non-contact power supply according to claim 1, further comprising:
an activation control unit for outputting an activation signal in conjunction with the operation of the external switch,
wherein the power transmission unit starts the power supply to the multiple transmission antennas when the activation control unit outputs the activation signal.

3. The power transmission control device for non-contact power supply according to claim 1, further comprising:
a response reception unit for receiving a response signal transmitted by a power receiving appliance to which non-contact power supply has been provided by one of the multiple transmission antennas that have started the power supply,
wherein the antenna determination unit determines the power transmission target antenna in response to the response signal when the response reception unit receives the response signal.

4. The power transmission control device for non-contact power supply according to claim 1, further comprising:
an antenna control unit for causing the power transmission unit to continue the power supply to the power transmission target antenna determined by the antenna determination unit and to stop the power supply to transmission antennas other than the power transmission target antenna.

5. The power transmission control device for non-contact power supply according to claim 2,
wherein the activation control unit outputs the activation signal when the external switch is turned on or off.

6. The power transmission control device for non-contact power supply according to claim 1,
wherein the antenna determination unit determines the power transmission target antenna on a basis of a state of the power supply to the transmission antennas by the power transmission unit.

7. The power transmission control device for non-contact power supply according to claim 4, further comprising:
a foreign matter detecting unit for detecting foreign matter present between the transmission antennas and a reception antenna included in a power receiving appliance to which non-contact power supply by one of the multiple transmission antennas has been started, on a basis of a state of the power supply to the power transmission target antenna in a state in which the power transmission unit is performing the power supply to the power transmission target antenna,
wherein the antenna control unit causes the power transmission unit to stop the power supply to the power transmission target antenna when the foreign matter detecting unit detects the foreign matter.

8. The power transmission control device for non-contact power supply according to claim 4,
wherein the antenna control unit causes the power transmission unit to perform the power supply to the power transmission target antenna, and maintains a state in which the power supply to the power transmission target antenna is continued until the external switch is operated again while maintaining a state in which the power supply to transmission antennas other than the power transmission target antenna is stopped.

9. The power transmission control device for non-contact power supply according to claim 4,
wherein the antenna control unit starts the power supply to transmission antennas other than the power transmission target antenna when the power transmission unit starts the power supply to the multiple transmission antennas, and there is a transmission antenna that has already been determined as the power transmission target antenna by the antenna determination unit.

10. A power transmission control method for non-contact power supply, the method comprising:
starting power supply to multiple transmission antennas, by a power transmission unit, in conjunction with an external switch when the external switch is operated; and
determining, by an antenna determination unit, a power transmission target antenna with which the power supply from the power transmission unit is to be continued, from among the multiple transmission antennas to which the power supply has been started.

11. A power transmission device for non-contact power supply, the power transmission device comprising:
multiple transmission antennas for supplying power to a reception antenna in a non-contact manner; and
a power transmission control device including:
a power transmission unit for starting power supply to the multiple transmission antennas in conjunction with an external switch when the external switch is operated; and
an antenna determination unit for determining a power transmission target antenna with which the power supply from the power transmission unit is to be continued, from among the multiple transmission antennas to which the power supply has been started.

12. The power transmission device for non-contact power supply according to claim 11,
each of the plurality of power transmission control devices corresponds to each of the multiple transmission antennas.

13. A non-contact power supply system comprising:
a power reception device including a reception antenna;
multiple transmission antennas for supplying power to the reception antenna in a non-contact manner; and
a power transmission control device including:
a power transmission unit for starting power supply to the multiple transmission antennas in conjunction with an external switch when the external switch is operated; and
an antenna determination unit for determining a power transmission target antenna with which the power supply from the power transmission unit is to be continued, from among the multiple transmission antennas to which the power supply has been started.

14. The non-contact power supply system according to claim 13,
wherein the transmission antennas perform non-contact power supply to a power receiving appliance by a resonance-type non-contact power supply scheme.
